# EUROPÄISCHE PATENTANMELDUNG

(11) **EP 1 289 256 A2**
(43) Veröffentlichungstag der Anmeldung: **05.03.2003**
(21) Anmeldenummer: 02015538.8
(22) Anmeldetag: 11.07.2002
(51) Int. Cl.: H04N 1/191

(54) **Druck- oder Bebilderungssystem**

(30) Priorität: 07.08.2001 DE 10138773
(71) Anmelder: Heidelberger Druckmaschinen Aktiengesellschaft, 69115 Heidelberg (DE)
(72) Erfinder: Frank, Hendrik, 69115 Heidelber (DE); Zintzen, Bernhard, 69120 Heidelberg (DE)
(74) Vertreter: Duschl, Edgar Johannes, Dr.

(57) **Zusammenfassung**

Bekannt ist ein Bebilderungssystem mit einem Bebilderungsmedium (3) und einem Schreibkopf (11), der mittels einer Antriebseinheit (7, 9) zur Bebilderung entlang des Mediums von einer Steuereinheit (19) gesteuert linear bewegbar ist. Um die Flexibilität und Verfügbarkeit des Druck-/Bebilderungssystems zu erhöhen, ist erfindungsgemäß vorgesehen, dass das Bebilderungssystem zumindest zwei Antriebseinheiten (7, 9) sowie zumindest zwei Schreibköpfe (11) ausweist, und dass die Steuereinheit (19) die Schreibköpfe (11) unabhängig voneinander entlang dem Bebilderungsmedium (3) zum Erzeugen von ein Gesamtbild ergebenden Teilbildern bewegt und die Bebilderung steuert.

## Beschreibung

Die vorliegende Erfindung betrifft ein Druck- oder Bebilderungssystem nach dem Oberbegriff des Patentanspruches 1.

Ein derartiges Bebilderungssystem ist bekannt aus der Druckschrift EP 1 068 958 A2, wobei ein Lasereinheiten-Schreibkopf mittels eines Spindelantriebes und eines Schrittmotors entlang einer Linie parallel zur Achse der rotierenden Bebilderungstrommel positionsgenau bewegt wird. Dabei erfolgt die exakte Positionierung bzw. Bewegungssteuerung des Schreibkopfes mit Hilfe verschiedener Sensoreinheiten.

Weiterhin sind Bebilderungssysteme mit Linearmotor aus den Druckschriften GB 2 050 947 A sowie US 4,631,432 allgemein bekannt.

Allgemein bekannt sind auch Antriebskonzepte mit Kugelrollspindeln mit Schritt- oder Servomotoren. Über die Kugelrollspindel wird die Drehbewegung in eine Linearbewegung umgesetzt. Die Spindel treibt dabei einen auf Linearführungen geführten Schlitten an, auf dem die Bebilderungseinheit montiert ist. Die bekannten Lösungen unterscheiden sich in der Art der Bebilderungsstrategie, nicht jedoch in der Art des Antriebes. Mit der Kugelrollspindel kann lediglich ein Schlitten verfahren werden. Alle Kanäle bzw. Laserdioden des Laserkopfes sind auf diesem Schlitten montiert. Bei einem Ausfall einzelner Kanäle muss nach einer Detektion des ausgefallenen Kanals eine neue Bebilderung angefangen werden.

Die bestehenden Antriebskonzepte für die bekannten Laserbebilderungseinheiten in Vorrichtungen zur digitalen Bebilderung von Druckplatten weisen bei dem Ausfall einzelner Laserdioden eine Reduzierung der Geschwindigkeit des Bebilderungsprozesses auf, wobei der Grad der Verlangsamung abhängig von der verwendeten Bebilderungsstrategie ist.

Die Aufgabe der vorliegenden Erfindung besteht in einer Erhöhung der Flexibilität und Verfügbarkeit eines Druck-/Bebilderungssystems.

Erfindungsgemäß ist dies bei einem System mit den Merkmalen des Patentanspruches 1 erreicht. Dieses ist insbesondere für Druckmaschinen oder Plattenbebilderungsgeräte geeignet. Die Erfindung ermöglicht ein flexibles und individuelles Verfahren der einzelnen Druckköpfe bzw. Lasermodule. Dabei können mehrere Schlitten unabhängig voneinander auf einer oder mehrerer Schiene/Schienen eines Linearantriebes oder mehreren Spindeln verfahren werden. Durch den Einsatz von Linearmotoren als Direktantrieb und eines Lineargebers wird die Wiederaufnahme einer abgebrochenen Bebilderung möglich, weil die Möglichkeit besteht, gezielt Positionen auf der Platte ein zweites Mal anfahren zu können.

Gemäß einer bevorzugten Ausführungsform ist vorgesehen, dass die Steuereinheit den Schreibköpfen lediglich einen Teilbereich der Gesamtbebilderungsbreite zur Bebilderung zuordnet. Dadurch kann das Bebilderungssystem optimal der Bebilderung kleinerer Bebilderungsplatten angepasst werden.

Vorteilhafter Weise ist vorgesehen, dass die Steuereinheit im Falle eines Defektes eines der Schreibköpfe den Bebilderungsalgorithmus ändert und den Gesamtbebilderungsbereich neu auf die verbleibenden intakten Schreibköpfe aufteilt. Dadurch ist ein hohes Maß an Flexibilität der Bebilderungseinheit im Fehlerfall ermöglicht.

Um eine aufwendige Demontage einer defekten Lasereinheit vermeiden zu können, ist insbesondere vorgesehen, dass die Antriebseinheit seitlich außerhalb des Gesamtbebilderungsbereiches einen Parkbereich aufweist, und dass die Steuereinheit einen defekten seitlich außen angeordneten Druckkopf in den Parkbereich fährt.

Gemäß einer bevorzugten Ausführungsform des erfindungsgemäßen Systems sind die Schreibköpfe auf einer einzigen Führung geführt, um im Unterschied zu einem Mehrfachführungssystem einen einfachen und kostengünstigen Aufbau realisieren zu können.

Als Antriebseinheit dient bevorzugt ein Linearantrieb mit einer Linearführung und einem Linearmotor, weil der Linearantrieb im Vergleich zu einem beispielsweise alternativ möglichen Spindelantrieb bzgl. Präzision und Geschwindigkeit vorteilhaft ist.

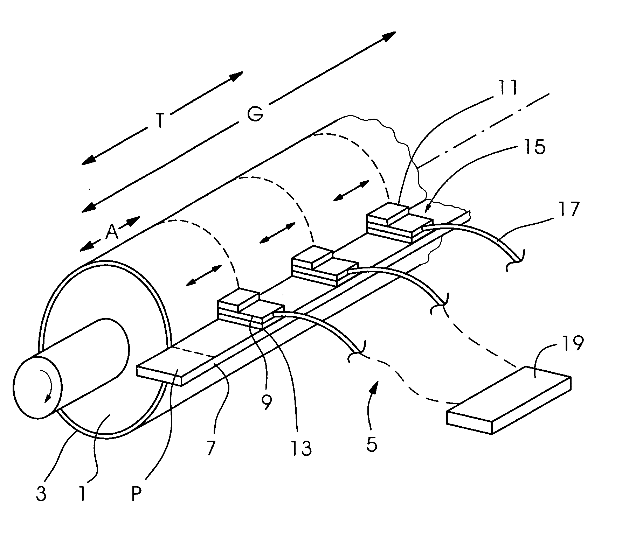

Nachfolgend ist ein Ausführungsbeispiel des erfindungsgemäßen Bebilderungssystems beschrieben; die einzige Fig. zeigt ausschnittsweise vereinfacht in einer perspektivischen Darstellung das Bebilderungssystem. Das Bebilderungssystem für eine DI (Direct Imaging)-Anwendung gemäß der Fig. weist einen Plattenzylinder 1 mit einer aufgespannten Bebilderungsplatte 3 auf. Dem Plattenzylinder 1 zugeordnet ist eine Bebilderungseinheit 5. Diese weist eine Linearantriebsanordnung auf mit mehreren auf einer Linearführung 7 geführten Linearmotoren 9, wodurch mehrere unabhängig voneinander ansteuerbare Antriebseinheiten realisiert sind. Dabei bildet die Linearführung 7 das unbestromte Sekundärteil des Antriebes und erstreckt sich über die Verfahrbreite des Bebilderungssystems. Der Linearmotor 9 bildet das Primärteil des Linearantriebes. Die Linearmotoren 9 sind als Schrittmotoren nach dem Reluktanzprinzip ausgebildet. Jeder der Linearmotoren 9 ist jeweils zusammen mit einem Lasermodul 11 an einem Schlitten 13 montiert und bildet ein Linearmodul 15. Jedes Linearmodul 15 weist also lediglich ein Lasermodul 11 auf, das aus einer Laserzeile mit z. B. 50 Kanälen bzw. Laserdioden besteht. Das Linearmodul 15 wird mittels eines Kabelschlepps 17 mit Energie versorgt. Zudem erfolgt über den Kabelschlepp 17 auch der Datentransfer zwischen dem Lasermodul 11 und einer Steuereinheit 19 des Bebilderungssystems. Die Steuereinheit 19 steuert die unabhängigen Bewegungen der Linearmodule 15 sowie die Bebilderung mittels der vier Lasermodule 11.

Beim Bebildern wird nun in Abhängigkeit von den Bilddaten ein Gesamtbebilderungsbereich G beispielsweise in vier gleich breite Bebilderungsbereiche A eingeteilt, was vier Linearmodule 15 erfordert. Für jeden der Lasermodule 11 wird der entsprechende Bebilderungsalgorithmus bereitgestellt. Alternativ ist es auch möglich, den Gesamtbebilderungsbereich G in unterschiedlich breite Bebilderungsbereiche aufzuteilen, falls dies bei den gegebenen Bilddaten einen Geschwindigkeitsvorteil bietet. Falls eine weniger breite Bebilderungsplatte 3 zu bebildern ist, kann der Gesamtbebilderungsbereich G auf einen entsprechenden Teilbebilderungsbereich T reduziert werden. Die Steuereinheit 19 positioniert dann die vier Lasermodule 11 entsprechend eng beabstandet im reduzierten Bereich T. Es erfolgt also eine Anpassung der Bebilderungseinheit 5 an die Plattengröße, womit eine Erhöhung der Bebilderungsgeschwindigkeit möglich ist.

Eine weitere Möglichkeit der Verwendung ist der Einsatz in Zeitungsrotationsdruckmaschinen. Hierbei werden üblicherweise mehrere separate Druckplatten nebeneinander auf dem Umfang eines Zylinders montiert. Zur Erzeugung von Lokalausgaben oder bei Defekten werden oftmals einzelne Platten auf dem Zylinder ausgetauscht. Die erfindungsgemäße Bebilderungseinrichtung kann hierbei vorteilhaft eingesetzt werden. Denn der Gesamtbebilderungsbereich G erstreckt sich in diesem Fall über die gesamte Zylinderbreite und über mehr als eine Platte. Üblicherweise repräsentiert dabei jede Platte ein von der benachbarten Platte unabhängiges Bild. Beim Austauschen einer einzelnen Platte gegen eine unbebilderte können nun alle Bebilderungseinheiten in dem Teilbebilderungsbereich T so eingesetzt werden, dass eine zeitlich optimierte Bebilderung dieser Platte durchgeführt werden kann. In so fern werden die Schreibköpfe also so gesteuert, dass jeder der Schreibköpfe ein Teilbild erzeugt, das auf dieser Platte ein Gesamtbild ergibt.

Falls im Fehlerfall eine Diode einer Diodenzeile oder ein gesamtes Lasermodul 11 ausfällt, veranlasst die Steuereinheit 19 in Abhängigkeit von den vorliegenden drucktechnischen Gegebenheiten, Folgendes:
- Falls das defekte Lasermodul randseitig angeordnet ist, wird dieses Lasermoduls in den Parkbereich P der Linearführung gefahren; falls das defekte Lasermodul zwischen den anderen Modulen liegt, wird dieses Lasermodul jeweils außerhalb des aktuellen Bebilderungsbereiches der räumlich benachbarten Lasermodule gefahren.
- Gleichzeitig wird der Gesamtbebilderungsbereich gleichmäßig oder anders geeignet auf die verbleibenden drei Lasermodule geteilt und es werden von der Steuereinheit entsprechend geänderte Bebilderungsalgorithmen und umsortierte Bebilderungsdaten bereitgestellt.
- Es kann auch lediglich eine Verkleinerung des Bebilderungsbereiches des defekten Lasermoduls erfolgen, falls das Lasermodul zumindest teilweise funktionsfähig ist.
- Ein benachbartes Lasermodul übernimmt vollständig den Bebilderungsbereich des defekten Lasermoduls. Die Bebilderung durch die übrigen Lasermodule bleibt unverändert.

Alternativ zu dem beschriebenen Ausführungsbeispiel könnten auch Motoren nach dem Synchron- oder Asynchronprinzip verwendet werden. Bei der Verwendung des Schrittmotors kann in Abhängigkeit von den Systemspezifikationen auf ein (nicht dargestelltes) Lagemesssystem verzichtet werden; denn die Schrittmotorsteuerung kann durch Zählen der gefahrenen Schritte des jeweiligen Linearmotors die für die Linearmodule 15 gewünschten Positionen gesteuert anfahren. Würden Asynchron- oder Synchronmotoren eingesetzt, würde ein Lagemesssystem für die Lageregelung und als Motorfeedbacksystem zum Einsatz kommen (nicht gezeigt). Die Lagegeber liefern der Motorsteuerung die exakten Positionen der verschiedenen Lasermodule 11, so dass über eine Lageregelung der einzelnen Linearmotoren 9 die genauen Positionen der Lasermodule 11 relativ zur Platte 3 bzw. zum Plattenzylinder 1 geregelt werden können. Dabei kann die Platte ruhen oder auch auf dem Zylinder aufgespannt rotieren.

In einer weiteren Ausrührungsform kann der Kabelschlepp auch durch berührungslos arbeitende (z.B. induktive, kapazitive) Energieübertragungseinheiten ersetzt werden. Auch kann die Datenübertragung vom Lasermodul 11 zur Steuereinheit 19 über spezielle Steuerleitungen oder berührungslos erfolgen (nicht gezeigt).

Alternativ zu der beschriebenen Ausführungsform mit dem breiten, sich im wesentlichen über die Länge des Plattenzylinders 3 erstreckenden Sekundärteil bzw. Linearführung 7 könnte auch ein an sich bekannter verteilter Linearmotor eingesetzt werden (nicht gezeigt). Bei diesem ist das Sekundärteil 7 über die gesamte Breite segmentiert ausgeführt und treibt pro Segment je ein Primärteil 9 an. Dabei sind das Primärteil 9 und das Lasermodul 11 ebenfalls jeweils an einem Schlitten montiert. Das Motorprinzip spielt dabei ebenfalls keine Rolle.

### Bezugszeichenliste

- 1: Plattenzylinder
- 3: Bebilderungsplatte
- 5: Bebilderungseinheit
- 7: Linearführung
- 9: Linearmotor
- 11: Lasermodul
- 13: Schlitten
- 15: Linearmodul
- 17: Kabelschlepp
- 19: Steuereinheit

- A: Bebilderungsbereich
- G: Gesamtbebilderungsbereich
- P: Parkbereich
- T: Teilbebilderungsbereich

## Patentansprüche

1. Druck- oder Bebilderungssystem mit einem Bebilderungsmedium (3) und einem Schreibkopf (11), der mittels einer Antriebseinheit (7, 9) zur Bebilderung entlang des Mediums von einer Steuereinheit (19) gesteuert linear bewegbar ist,
**dadurch gekennzeichnet,**
**dass** das Bebilderungssystem zumindest zwei Antriebseinheiten (7, 9) sowie zumindest zwei Schreibköpfe (11) ausweist, und dass die Steuereinheit (19) die Schreibköpfe (11) unabhängig voneinander entlang dem Bebilderungsmedium (3) zum Erzeugen von ein Gesamtbild ergebenden Teilbildern bewegt und die Bebilderung steuert.

2. Druck- oder Bebilderungssystem nach Anspruch 1,
**dadurch gekennzeichnet,**
**dass** die Steuereinheit (19) den Schreibköpfen (11) unterschiedlich breite Bebilderungsbereiche (A) zur Bebilderung zuordnet.

3. Druck- oder Bebilderungssystem nach Anspruch 1,
**dadurch gekennzeichnet,**
**dass** die Steuereinheit (19) den Schreibköpfen (11) gleich breite Bebilderungsbereiche (A) zur Bebilderung zuordnet.

4. Druck- oder Bebilderungssystem nach Anspruch 1, 2 oder 3,
**dadurch gekennzeichnet,**
**dass** die Steuereinheit (19) beim Defekt eines der Schreibköpfe (11) den Bebilderungsalgorithmus ändert und die Bebilderung des defekten Schreibkopfes durch zumindest einen intakten Schreibkopf realisiert.

5. Druck- oder Bebilderungssystem nach einem der vorhergehenden Ansprüche,
**dadurch gekennzeichnet,**
**dass** die Antriebseinheit (7, 9) seitlich außerhalb eines Gesamtbebilderungsbereiches (G) einen Parkbereich (P) aufweist, und dass die Steuereinheit (19) einen defekten seitlich außen angeordneten Druckkopf (11) in den Parkbereich (P) fährt.

6. Druck- oder Bebilderungssystem nach einem der vorhergehenden Ansprüche,
**dadurch gekennzeichnet,**
**dass** die Steuereinheit (19) im Falle eines Defektes eines der Schreibköpfe (11) den Bebilderungsalgorithmus ändert und den Gesamtbebilderungsbereich (G) neu auf die verbleibenden intakten Schreibköpfe aufteilt.

7. Druck- oder Bebilderungssystem nach einem der vorhergehenden Ansprüche,
**dadurch gekennzeichnet,**
**dass** die Schreibköpfe (11) auf einer einzigen Führung (7) geführt sind.

8. Druck- oder Bebilderungssystem nach einem der vorhergehenden Ansprüche,
**dadurch gekennzeichnet,**
**dass** die Steuereinheit (19) den Schreibköpfen (11) lediglich einen Teilbereich (T) der Gesamtbebilderungsbreite (G) zur Bebilderung zuordnet.

9. Druck- oder Bebilderungssystem nach einem der vorhergehenden Ansprüche,
**dadurch gekennzeichnet,**
**dass** die Antriebseinheit durch einen Linearantrieb mit einer Linearführung (7) und einem Linearmotor (9) realisiert ist.

10. Druck- oder Bebilderungssystem nach Anspruch 1,
**dadurch gekennzeichnet,**
**dass** entlang des Bebilderungsmediums eine Mehrzahl von Bebilderungsplatten angeordnet sind, wobei auf wenigstens einer dieser Bebilderungsplatten ein Gesamtbild auf dieser Platte erzeugt wird.
